# EUROPEAN PATENT SPECIFICATION

(11) **EP 1 895 788 B1**
(45) Date of publication and mention of the grant of the patent: **26.10.2011**
(21) Application number: 07720678.7
(22) Date of filing: 04.04.2007
(51) Int. Cl.: H04W 4/14

(54) **SHORT MESSAGE FILTERING METHOD, SIGNALING PROCESSING SYSTEM AND SHORT MESSAGE SERVICE CENTER**
KURZNACHRICHTENFILTERVERFAHREN, SIGNALVERARBEITUNGSSYSTEM UND KURZNACHRICHTENDIENSTZENTRALE
PROCÉDÉ DE FILTRAGE DE MESSAGES COURTS, SYSTÈME DE TRAITEMENT DE SIGNALISATION ET CENTRE DE SERVICE DE MESSAGES COURTS

(30) Priority: 09.06.2006 CN 200610082807
(43) Date of publication of application: 05.03.2008
(73) Proprietor: Huawei Technologies Co., Ltd., Longgang District, Shenzhen Guangdong 518129 (CN)
(72) Inventor: WANG, Xuan, Shenzhen, Guangdong 518129 (CN); ZHONG, Chaodong, Shenzhen, Guangdong 518129 (CN); MA, Ningzhi, Shenzhen, Guangdong 518129 (CN); MA, Jiaming, Shenzhen, Guangdong 518129 (CN); ZHENG, Zhongen, Shenzhen, Guangdong 518129 (CN)
(74) Representative: Epping - Hermann - Fischer
(86) International application number: PCT/CN2007/001105
(87) International publication number: WO 2007/140687

(56) References cited:
- EP-A- 1 628 448
- WO-A-02/071774
- WO-A-2006/016189
- WO-A-2006/040749
- WO-A1-2004/054188
- CN-A- 1 426 214
- CN-A- 1 564 546
- US-A1- 2005 186 974
- US-A1- 2006 079 255

## Description

### Field of the Invention.

The present invention relates to Short Message Service (SMS) technique in mobile communication system, and in particular, to a short message filtering method, a signal processing system, and a short message service center.

Background of the InventionPresently, short message service (SMS), as a value-added communication service, brings communication convenience to the subscribers and tremendous economic benefit to the operators. In a mobile communication system implementing SMS service, a short message service center (SMSC) is linked to a signaling transfer point (STP) via a signaling gateway, so as to access to the public land mobile network (PLMN) and implement the SMS application.

However, as SMS is increasingly used widely, some malicious people utilize SMS to disseminate spam short messages and cause severe inconvenience and distaste to the subscribers. To prevent the adverse effects of spam short messages, the operator provides a short message filtering mechanism on SMSC in the mobile communication system to filter out short messages with sensitive words. That approach can effectively prevent adverse effects to the subscribers while ensure normal SMS.

However, in the short message filtering mechanism provided by the SMSC, only a mobile originated (MO) short message submitted to the SMSC can be filtered, i.e., it can only filter effectively a short message sent from a local subscriber to another local subscriber or from a local subscriber to a foreign subscriber. Therefore, such a short message filtering mechanism has an inevitable limitation, especially for a short message sent from a foreign subscriber to a local subscriber or a short message sent from a foreign subscriber to a foreign subscriber roaming in the local network. Because such short messages are not forwarded to the local SMSC before they are sent to the mobile switching center (MSC) in the local network, these mobile terminated (MT) short messages from a foreign subscriber to local network will not be filtered by the SMSC in the local network.

WO 2006/016189 A1 discloses telecommunications services apparatuses and methods for use with a mobile telecommunications system, such as a mobile telephone system, in which an SMS router receives a mobile terminated text message from a terminal addressed to the terminal of a network subscriber, the received mobile terminated message is stored in an MT store and then delivered to a required recipient, who may be the network subscriber and/or a different destination as a result of copy or divert, and the SMS router receives a "send routing information for short message (SRI_SM)" signal from a signaling transfer point, global title translator or home location register, which provides its own location as to the original destination address of the received text message. The SMS router is then able to implement any desired processing on the received text message, like spam fittering, before finally optionally forwarding the received text message to the actual location of the network subscriber.

EP 1628448 A1 discloses a spam filtering system and method for filtering spam destined for a mobile communication device. D2 neither discloses nor suggests judging by a signal processing system whether a received message is a mobile terminated short message.

WO 02/071774 A1 discloses methods and systems for preventing the delivery of unwanted or spam short message service (SMS) message to a subscriber in a mobile communication network and more particularly, for intercepting and discarding unwanted SMS messages at an SMS message routing node, thereby preventing the delivery of the unwanted SMS messages to an SMS subscriber.

US 2005/0186974 A1 discloses a method and apparatus for screening SMS and/or multimedia message service (MMS) calls.

WO 2006/040749 discloses a system and method of managing SMS messages in a first mobile operator network, said network comprising a plurality of subscribers and a Short Message Service Center (SMSC). An SMS message delivery attempt for an sms message from a foreign network is intercepted by an intelligent signalling routing node in a local network and routed to a smart services control node which determines if smart service is applicable to the associated sms message.

### Summary of the Invention

An embodiment of the present invention provides a short message filtering method to solve the problem in the prior art that a short message sent from a foreign subscriber to a local subscriber or to a foreign subscriber roaming in the local network can not be filtered.

Accordingly, the present invention provides a short message fittering method, a signal processing system and a short message service center (SMSC) according to independent claims 1, 7 and 9 respectively. Preferred embodiments are defined in the dependent claims.

In the embodiments of present invention, all messages sent from a foreign network to the local network are translated and routed to the signal processing system (SPS) in the local network. The local SPS analyses the received messages, if the message is not an MT short message, translates and routes the message, according to a destination MSC number contained in the message, to a corresponding destination MSC for a normal processing; if the message is an MT short message, forwards the MT short message via a local signaling transfer point (STP) to the local SMSC for filtering. So as to the MT short messages sent from foreign subscribers to local subscribers or to foreign subscribers roaming in the local network can also be filtered, therefore the limitation of the existing short message filtering mechanism is well eliminated.

### Brief Description of the Drawings.

Figure 1 is a flow diagram of the method for filtering a short message according to an embodiment of the present invention;
Figure 2 is a schematic diagram of the level structure of a signaling network according to an embodiment of the present invention;
Figure 3 is a schematic diagram of the method for processing procedure according to an embodiment of the present invention;
Figure 4 is a structural block diagram of the signal processing system (SPS) according to an embodiment of the present invention;
Figure 5 is a structural block diagram of the short message service center (SMSC) according to an embodiment of the present invention;
Figure 6 is a structural block diagram of the SMSC with capability for processing the send routing information (SRI) according to an embodiment of the present invention.

### Detailed Description of the Embodiments.

In view of the problem in the prior art, i.e., by using the short message filtering mechanism set in the SMSC in the local network, the SMSC can only filter a short message sent from a local subscriber to a local subscriber or from a local subscriber to a foreign subscriber but can not effectively filter a short message sent from a foreign subscriber to a local subscriber or from a foreign subscriber to a foreign subscriber roaming in the local network, an embodiment of the present invention provides a technical solution to implement filtering a short message from a foreign subscriber to a local subscriber or to a subscriber roaming in the local network, and therefore overcome the limitation of the existing short message filtering mechanism.

The principle, embodiments, and beneficial effects of the technical solution provided in the present invention will be described in detail, with reference to the accompanying drawings.

Embodiments of the present invention improve the SMSC and the signal processing system (SPS) in the local network, so that they can work cooperatively to implement that the local SMSC can filter an MT short message sent from a foreign subscriber to a local subscriber or to a foreign subscriber roaming in the local network.

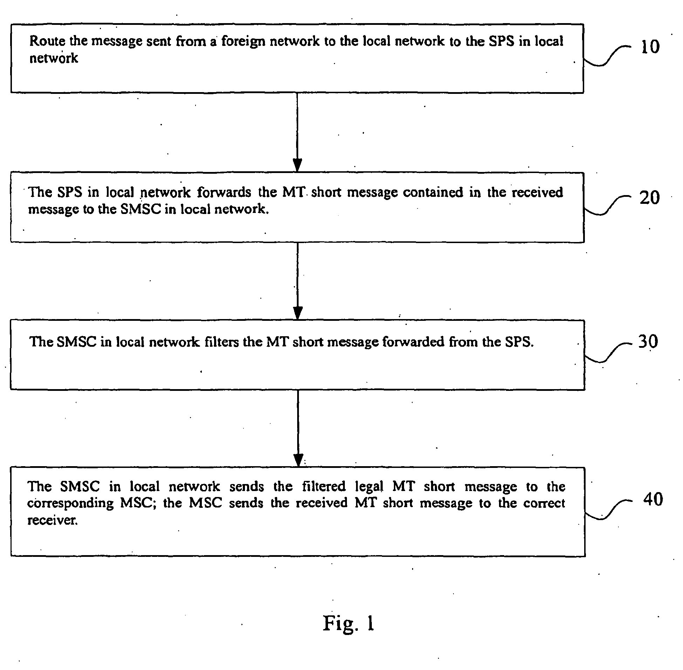

Referring to Figure 1, a flow diagram of the method for a short message filtering according to an embodiment of the present invention; the procedures of the method are as follows:
Block 10: A message sent from a foreign network to the local network is routed to the local SPS, for example, by setting the global title (GT) translation data of the upper layer STP in the signaling network.

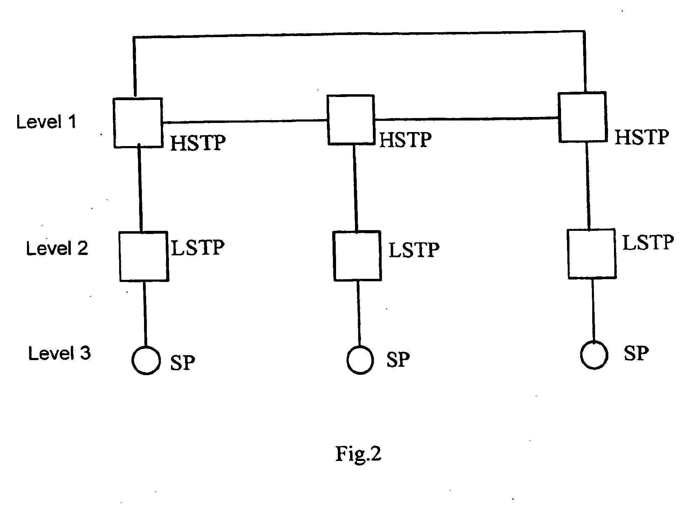

For example, in a signaling network in three-level structure, the first level is the highest level in the signaling network, referred to as a High-Level Signaling Transfer Point (HSTP); the second level is referred to as a Low-Level Signaling Transfer Point (LSTP); the third level is referred to as a Signaling Points (SP). The SP includes various switching centers and special service centers. Please see Figure 2 for the specific level structure of the signaling network.

In order to intercept a short message sent from a foreign network to local network to the local SMSC for filtering, the setting of the GT translation data for the HSTP or LSTP in the signaling network may be modified appropriately to translate and route the message that ought to be sent to the local MSC to the local SPS for processing.

Block 20: The local SPS forwards the MT short messages (including short messages sent from the foreign subscribers to the local subscribers, or short messages sent from the foreign subscribers to foreign subscribers roaming in the local network) among the received messages to the SMSC in the local network.

The local SPS may analyze the received messages to obtain the MT short messages among the received messages. In addition, SPS may also obtain the Non-MT short messages among the received messages during the analyzing for the received messages, and the SPS may forward each of the Non-MT short messages to a corresponding MSC for processing, according to the destination MSC number contained in the Non-MT short message. That is to say, after the local SPS receives a signaling message, with the local MSC as the receiver, forwarded from the HSTP or the LSTP, the local SPS analyzes the message and forwards the MT message obtained from the analyzing to the local SMSC for processing, via a signaling transfer point (STP) in the local network, but directly translates and routes the Non-MT message obtained from the analyzing to the corresponding MSC for a normal processing according to the destination MSC number contained in the Non-MT message.

Block 30: The local SMSC filters the MT short message forwarded from the SPS. The local SMSC may judges whether the MT short message is a legal MT short message or a spam MT short message by matching the short message content with sensitive words which may be determined by the operator.

Bloc 40: The local SMSC sends the legal MT short message obtained by filtering to the corresponding MSC for processing, according to the destination MSC number contained in the legal MT short message, then the MSC sends the legal MT short message to the corresponding receiver according to the IMSI of the receiver contained in the legal MT short message.

Subsequently, the MSC that sent the legal MT short message may report the legal MT short message sending result to the SMSC in the local network, and then the local SMSC feeds back the received sending result to the corresponding SMSC in the foreign network that sent the message;

If the local SMSC finds the MT short message is a spam MT short message when filtering the MT short message forwarded from the SPS, it feeds back a response message with failure cause of delivery failure to the SMSC in the foreign network that sent the message.

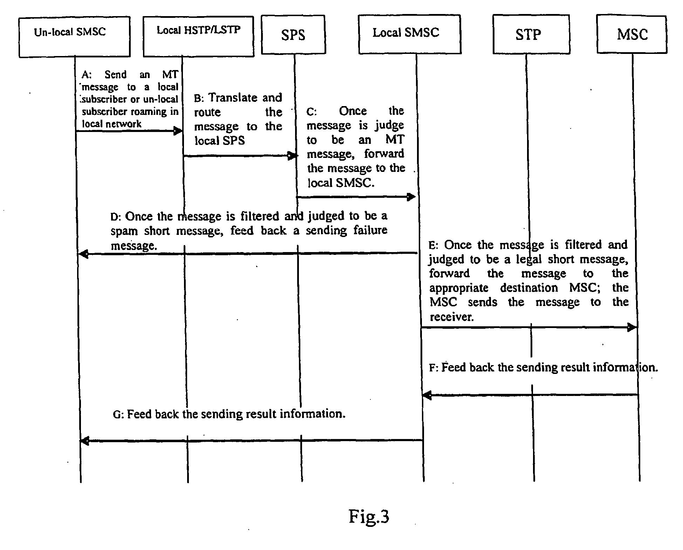

The processing procedures in above block 30 and 40 are: if the local SMSC finds the MT short message forwarded from the local SPS is a spam MT short message when filtering the MT short message, it simulates the destination MSC for the spam MT short message to return a response message with failure cause of delivery failure to the SMSC in the foreign network, where the value of the response message with failure cause of delivery failure may be configured in advance. If the local SMSC finds the MT short message forwarded from the local SPS is a legal MT short message when filtering the MT short message, it directly sends the legal MT short message to the destination MSC via the local STP instead of retrieving routing information from a home location register (HLR) and making the destination MSC to send the legal MT short message to a mobile subscriber (MS) according to the routing information, since the legal MT short message contains an IMSI number of the mobile subscriber and a destination MSC number. After sending the legal MT short message, the destination MSC may feed back sending result information for the legal MT short message to the local SMSC via the STP in the local network, and then, the local SMSC will forward the received sending result information to the corresponding SMSC in the foreign network that sent the MT short message. Referring to Figure 3, a schematic diagram of the method for processing procedure according to an embodiment of the present invention is provided. The specific procedure is as follows:
A. the SMSC in a foreign network sends an MT message to a local subscriber or to a subscriber roaming in the local network;
B. when the HSTP or LSTP finds that a message is routing with an MSC number of the local network, it performs the GT translation for the message and routes it to the local SPS for processing according to the pre-configured routing data (GT translation data);
C. the local SPS analyzes the received message, and, if the SPS determines that the message is an MT message sent from a foreign subscriber to a local subscriber or to a foreign subscriber roaming in the local network, it forwards the message directly to the local SMSC for processing;
D. the local SMSC filters the MT short message forwarded from the SPS in the local network, and, if the SMSC finds that the filtered MT short message is a spam MT short message, it simulates the destination MSC for the MT spam short message to feed back a response message with failure cause of delivery failure to the SMSC in the foreign network that sent the message;
E. the local SMSC filters the MT short message forwarded from the SPS in the local network, and, if the SMSC finds that the filtered MT short message is a legal MT short message, it sends the legal MT short message to the destination MSC via the local STP according to the destination MSC number contained in the legal MT short message. Then, the destination MSC sends this MT short message to a corresponding mobile subscriber (MS) according to the IMSI information of the mobile subscriber contained in the MT short message;
F. after sending the legal MT short message, the destination MSC feeds back the sending result to the local SMSC via the STP in the local network;
G. the local SMSC forward the received sending result to the SMSC in the foreign network.

The local SMSC may also accomplish the following tasks, besides filtering the MT short message forwarded from the local SPS and forward the sending result to the SMSC in the foreign network that sent the message:
1. The local SMSC records an MO call ticket for each MT short message forwarded from the SPS in the local network, where the MO call ticket is used by the local SMSC to log the detailed content of each short message received, including the sender's number, the receiver's number, the message content, etc. If the local SMSC fails in the short message filtering process, it logs the corresponding failure cause in the MO call ticket, and if the SMSC accomplishes the short message filtration successfully, it logs the filtering result in the MO call ticket. The MO call ticket stores the original IMSI number of the MT short message receiver, the SMSC number of the foreign MT short message initiator, etc.
2. After receiving the sending result (sending success or failure response message) from the destination MSC, the SMSC forwards the sending result to the foreign SMSC that sent the MT short message. In that process, if the sending result can not be sent due to interface disconnection or the sending result message is not received from the destination MSC within a specified time limit, the local SMSC will simulate the destination MSC to return a response message to the foreign SMSC that sent the MT short message, to indicate a failure has occurred.
3. During the process that the local SMSC forwards multiple messages sent from a foreign SMSC to a local subscriber, the local SMSC prevents any other foreign SMSC from sending any message to the local subscriber, i.e., if a foreign SMSC A is sending multiple messages to a receiver C but a foreign SMSC B also sends a message to the receiver C before foreign SMSC A indicates that the multiple messages have been completely sent, the local SMSC will simulate the destination MSC to return an error code to the foreign SMSC B, to indicate the receiver is busy. Such multiple messages refer to multiple messages sent in one sending process. For example, if the receiver of multiple messages is the same subscriber, these messages may be sent to the subscriber in one sending process, by means of retrieving routing information for the first message and then sending the subsequent messages directly with the routing information obtained when the first message is sent.
4. In the case that the MT short message can not be sent normally due to some internal failures of the SMSC in the local network, or the short message filtering fails or is overtime, the local SMSC simulates the destination MSC to return a failure response message to the foreign SMSC that sent the MT short message.

If the local network does not intercept the send routing information (SRI) message from a foreign network in above process, when a local subscriber roams to a visiting network and any other foreign subscriber sends an MT short message to the local subscriber, the MT short message can not be sent to the local SMSC via the SPS in the local network, and therefore the purpose of filtering the MT short message can not be achieved. To solve that problem, the embodiments of the present invention specifies: when the local SMSC receives an SRI message, which is used to obtain current location information of a local subscriber, from a foreign network, the local SMSC constructs an IMSI number for the local subscriber and adds the IMSI number into an SRI response message (here, the construction of the IMSI number of a local subscriber by an SMSC is a known technique to those skilled in the art, and there will not be described further here), regardless whether the local subscriber is in the home network or is roaming in any visiting network. Moreover, the local SMSC takes its own number as the MSC number for the current location of this local subscriber and also adds the number into the SRI response message. The local SMSC feeds back the SRI response message filled with above information to the foreign network that sent the SRI message. Therefore, when a foreign subscriber sends an MT short message to the local subscriber, the MT short message sent from the foreign subscriber to the local subscriber will be forwarded directly to the SMSC in the local network, no matter whether the local subscriber is in the home network or is roaming in the visiting network, and then, the local SMSC will filter the MT short message. In this way, The MT short message will not be sent directly to the current visiting network where the local subscriber is, so as to avoid the phenomenon that the current visiting network can not filter the short message.

It is seen from the above that in the embodiments of the present invention, the GT translation data of the HSTP or LSTP in the signaling network structure is modified, so that all messages with the address of the local MSCs as the destination addresses are translated and routed to the SPS in the local network. The local SPS analyses each of the received messages, and, if the SPS finds the received message is a Non-MT short message, it will translate and route the Non-MT short message directly to the corresponding destination MSC for a normal processing according to the destination MSC number contained in the message; if the SPS finds the received message is an MT short message, it will forward the MT short message, via the STP in the local network, to the local SMSC for filtering. In this way, the local network may also filter the MT short messages initiated by the foreign subscribers to the local subscribers or to the foreign subscribers roaming in the local network, therefore, the embodiments of the present invention well overcomes the limitation of existing short message filtering mechanism.

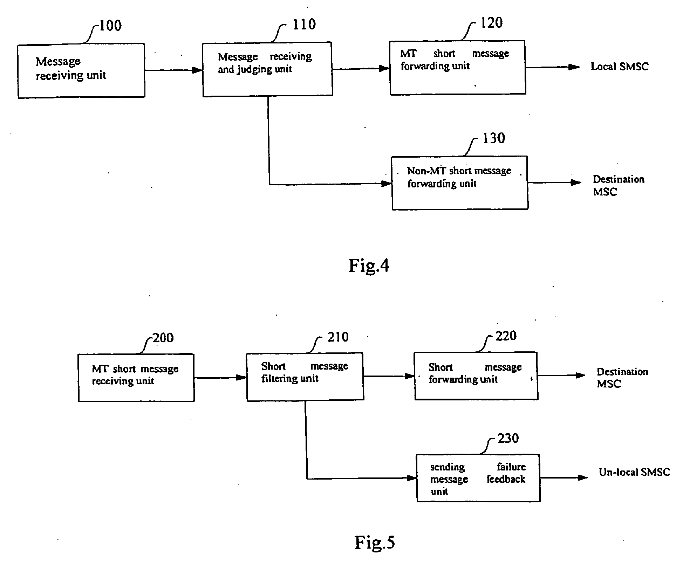

With reference to above short message filtering method provided in embodiments of the present invention, here the present invention provides a signal processing system (SPS), as shown in Figure 4, a structural block diagram of the SPS put forward according to an embodiment of the present invention, including: a message receiving unit 100, a message analyzing and judging unit 110, an MT short message forwarding unit 120, and a Non-MT short message forwarding unit 130. The main function of each unit is as follows:

The message receiving unit 100 is adapted to receive messages sent from foreign networks to the local network;

The message analyzing and judging unit 110 is adapted to analyze each of the messages received by above message receiving unit 100, to judge whether the received message is an MT short message;

The MT short message forwarding unit 120 is adapted to forward the MT short message to the local SMSC if above message analyzing and judging unit 110 judges that the received message is an MT short message;

The Non-MT short message forwarding unit 130 is adapted to forward a Non-MT short message to a corresponding MSC, according to the destination MSC number contained in the Non-MT short message, after the above message analyzing and judging unit 110 judges that the message received by the message receiving unit 100 is a Non-MT short message.

With reference to the short message filtering method provided in embodiments of the present invention, here the present invention also provides a short message service center (SMSC), as shown in Figure 5, a structural block diagram of the SMSC put forward according to an embodiment of the present invention, including: an MT short message receiving unit 200, a short message filtering unit 210, a short message forwarding unit 220, and a sending failure message feedback unit 230. The main function of each unit is as follows:

The MT short message receiving unit 200 is adapted to receive the MT short message forwarded from the SPS in the local network;

The short message filtering unit 210 is adapted to filter the MT short message received by above MT short message receiving unit 200;

The short message forwarding unit 220 is adapted to forward the legal MT short message identified by the above short message filtering unit 210 to a corresponding destination MSC according to the destination MSC number contained in the message;

The sending failure message feedback unit 230 is adapted to feed back a corresponding response message with failure cause of delivery failure to the SMSC in the foreign network that sent the MT short message when the above short message filtering unit 210 identifies that an MT short message is a spam MT short message.

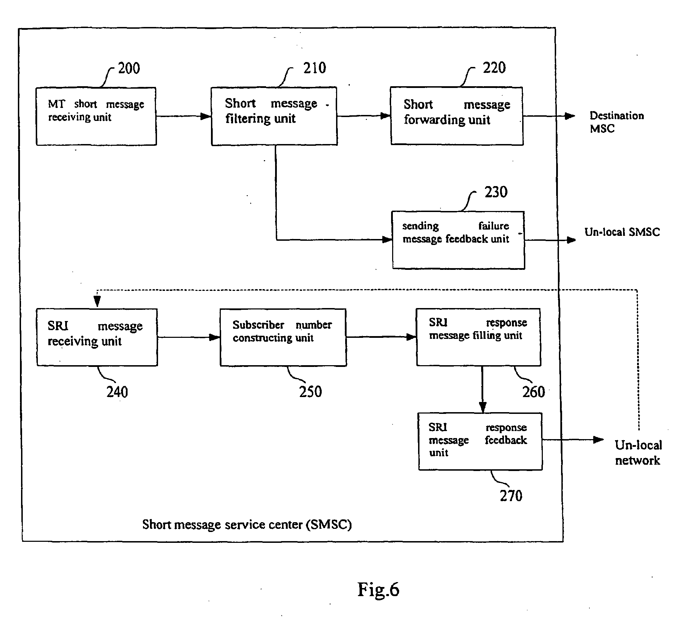

Referring to Figure 6, a structural block diagram of the SMSC with capability for processing the SRI according to an embodiment of the present invention. On the basis of the structure as shown in Figure 5, the SMSC further includes an SRI message receiving unit 240, a subscriber number constructing unit 250, an SRI response message filling unit 260, and an SRI response message feedback unit 270.

The SRI message receiving unit 240 is adapted to receive the SRI message, which is used to obtain current location information of the local subscriber, from a foreign network;

The subscriber number constructing unit 250 is adapted to construct the IMSI number of the local subscriber when the SRI message receiving unit 240 receives an SRI message;

The SRI response message filling unit 260 is adapted to add the IMSI number constructed by the subscriber number constructing unit 250 into the corresponding SRI response message and add the SMSC number as the number of the MSC for current location of the local subscriber into the corresponding SRI response message;

The SRI response message feedback unit 270 is adapted to feed back the corresponding SRI response message filled with the above information by the SRI response message filling unit 260 to the foreign network that sent the SRI message.

For implementation details about other techniques related to the SPS and SMSC put forward in the present invention, please see the detailed description of above method provided in the embodiments of the present invention and the implementation details will not be described further here.

Those skilled in the art should recognize that various variations and modifications can be made without departing from the scope of the present invention as defined by the accompanying claims. Thus, the present invention intends to include these variations and modifications if they are within the scope of the claims.

## Claims

1. A short message filtering method, comprising:
routing (10) a message, sent from a foreign network to a local network, to a signal processing system in the local network;
forwarding (20), by the signal processing system in the local network, the received message to a short message service center in the local network, if the signal processing system in the local network analyzes that the received message is a mobile terminated short message;
filtering (30), by the short message service center in the local network, the mobile terminated short message;
sending (40), by the short message service center in the local network, the mobile terminated short message to a corresponding mobile switching center, if the mobile terminated short message is legal; and
sending (40), by the corresponding mobile switching center, the mobile terminated short message to a mobile subscriber;
wherein the message sent from the foreign network to the local network is routed to the signal processing system in the local network by setting global title translation data of an upper layer signal transfer point in the signaling network structure.

2. The method according to claim 1, **characterized by** further comprising:
forwarding, by the signal processing system in the local network, the received message to the corresponding mobile switching center according to a destination mobile switching center number contained in the received message, if the signal processing system in the local network analyzes that the received message is a Non-mobile terminated short message.

3. The method according to claim 1, **characterized in that** the short message service center in the local network forwards the legal mobile terminated short message to the corresponding mobile switching center according to a destination mobile switching center number contained in the legal mobile terminated short message; and
the corresponding mobile switching center sends the mobile terminated short message to the corresponding mobile subscriber according to an International Mobile Station Identifier number of the mobile subscriber contained in the received mobile terminated short message.

4. The method according to claim 1, **characterized by** further comprising:
reporting, by the corresponding mobile switching center, a mobile terminated short message sending result to the short message service center in the local network; and
feeding back, by the short message service center in the local network, the received sending result to a corresponding short message service center in the foreign network that sent the legal mobile terminated short message.

5. The method according to claim 1, **characterized by** further comprising:
feeding back, by the short message service center in the local network, a response message with failure cause of delivery failure to a short message service center in the foreign network that sent the mobile terminated short message, when filtering the mobile terminated short message and finding that it is a spam mobile terminated short message.

6. The method according to claim 1, **characterized by** further comprising:
constructing, by the short message service center in the local network, an International Mobile Station Identifier number of a local subscriber and filling the International Mobile Station Identifier number into a send routing information response message, when receiving a send routing information message, which is used to obtain location information of the local subscriber, from the foreign network; and
filling the number of the short message service center in the local network as the number of the mobile switching center for the current location of the local subscriber into the send routing information response message;
feeding back, by the short message service center in the local network, the send routing information response message that underwent the filling processing to the foreign network that sent the send routing information message.

7. A signal processing system, comprising:
a message receiving unit (100), adapted to receive a message sent from a foreign network to a local network, wherein the message is routed to the signal processing system in the local network by setting global title, GT, translation data of an upper layer signal transfer point in the signaling network structure;
a message analyzing and judging unit (110), adapted to analyze the message received by the message receiving unit (100), and to judge whether the received message is a mobile terminated short message;
a mobile terminated short message forwarding unit (120), adapted to forward the received message to a short message service center in the local network if the message analyzing and judging unit (110) judges that the received message is a mobile terminated short message.

8. The system according to claim 7, **characterized by** further comprising: a Non-mobile terminated short message forwarding unit (130), adapted to forward a Non-mobile terminated short message to a corresponding mobile switching center, according to a destination mobile switching center number contained in the Non-mobile terminated short message, upon the message analyzing and judging unit (110) judges that the message received by the message receiving unit (100) is a Non-mobile terminated short message.

9. A short message service center, comprising:
a mobile terminated short message receiving unit (200), adapted to receive a mobile terminated short message forwarded from a signal processing system when the signal processing system judges that a message, from a foreign network, received by the signal processing system, in a local network, is the mobile terminated short message, wherein the message is routed to the signal processing system in the local network by setting global title, GT, translation data of an upper layer signal transfer point in the signaling network structure;
a short message filtering unit (210), adapted to filter the mobile terminated short message received by the mobile terminated short message receiving unit (200);
a short message forwarding unit (220), adapted to forward a legal mobile terminated short message passed by the short message filtering unit (210) to a corresponding mobile switching center.

10. The short message service center according to claim 9, **characterized by** further comprising: a sending failure message feedback unit (230), adapted to feed back a response message with failure cause of delivery failure to a short message service center in the foreign network that sent the mobile terminated short message if the short message filtering unit (210) finds out that the mobile terminated short message is a spam mobile terminated short message.

11. The short message service center according to claim 9, **characterized by** further comprising:
a send routing information message receiving unit (240), adapted to receive a send routing information message, which is used to obtain location information of a local subscriber, from the foreign network;
a subscriber number constructing unit (250), adapted to construct an International Mobile Station Identifier number of the local subscriber when the send routing information message receiving unit (240) receives the send routing information message;
a send routing information response message filling unit (260), adapted to fill the International Mobile Station Identifier mumber constructed by the subscriber number constructing unit (250) into a send routing information response message and fill the number of the short message service center as the number of the mobile switching center for the current location of the local subscriber into the send routing information response message;
a send routing information response message feedback unit (270), adapted to feed back the send routing information response message that underwent the filling processing by the send routing information response message filling unit (260) to the foreign network that sent the send routing information message.

## Patentansprüche

1. Kurznachrichten-Filterverfahren mit den folgenden Schritten:
Routen (10) einer Nachricht, die von einem Fremdnetz zu einem lokalen Netz gesendet wird, zu einem Signalverarbeitungssystem in dem lokalen Netz;
Weiterleiten (20) der empfangenen Nachricht durch das Signalverarbeitungssystem in dem lokalen Netz zu einer Kurznachrichten-Dienststelle in dem lokalen Netz, wenn das Signalverarbeitungssystem in dem lokalen Netz analysiert, dass die empfangene Nachricht eine mobilterminierte Kurznachricht ist;
Filtern (30) der mobilterminierten Kurznachricht durch die Kurznachrichten-Dienststelle in dem lokalen Netz;
Senden (40) der mobilterminierten Kurznachricht durch die Kurznachrichten-Dienststelle in dem lokalen Netz zu einer entsprechenden Mobilvermittlungsstelle, wenn die mobilterminierte Kurznachricht legal ist; und
Senden (40) der mobilterminierten Kurznachricht durch die entsprechende Mobilvermittlungsstelle zu einem mobilen Teilnehmer;
wobei die von dem Fremdnetz zu dem lokalen Netz gesendete Nachricht zu dem Signalverarbeitungssystem in dem lokalen Netz geroutet wird, indem Globaltitel-Übersetzungsdaten eines Signaltransferpunkts der oberen Schicht in der Signalisierungsnetzstruktur gesetzt werden.

2. Verfahren nach Anspruch 1, **dadurch gekennzeichnet, dass** es ferner Folgendes umfasst:
Weiterleiten der empfangenen Nachricht durch das Signalverarbeitungssystem in dem lokalen Netz zu der entsprechenden Mobilvermittlungsstelle gemäß einer in der empfangenen Nachricht enthaltenen Ziel-Mobilvermittlungsstellennummer, wenn das Signalverarbeitungssystem in dem lokalen Netz analysiert, dass die empfangene Nachricht eine nicht-mobilterminierte Kurznachricht ist.

3. Verfahren nach Anspruch 1, **dadurch gekennzeichnet, dass** die Kurznachrichten-Dienstelle in dem lokalen Netz die legale mobilterminierte Kurznachricht gemäß einer in der legalen mobilterminierten Kurznachricht enthaltenen Ziel-Mobilvermittlungsstellennummer zu der entsprechenden Mobilvermittlungsstelle weiterleitet; und
die entsprechende Mobilvermittlungsstelle die mobilterminierte Kurznachricht gemäß einer in der empfangenen mobilterminierten Kurznachricht enthaltenen Nummer der International Mobile Station Identifier des mobilen Teilnehmers zu dem entsprechenden mobilen Teilnehmer sendet.

4. Verfahren nach Anspruch 1, **dadurch gekennzeichnet, dass** es ferner Folgendes umfasst:
Melden eines Sendeergebnisses der mobilterminierten Kurznachricht durch die entsprechende Mobilvermittlungsstelle an die Kurznachrichten-Dienststelle in dem lokalen Netz; und
Rückmelden des empfangenen Sendeergebnisses durch die Kurznachrichten-Dienststelle in dem lokalen Netz an eine entsprechende Kurznachrichten-Dienststelle in dem Fremdnetz, das die legale mobilterminierte Kurznachricht gesendet hat.

5. Verfahren nach Anspruch 1, **dadurch gekennzeichnet, dass** es ferner Folgendes umfasst:
Rückmelden einer Antwortnachricht mit Fehlschlagursache des Ablieferungsfehlschlags durch die Kurznachrichten-Dienststelle in dem lokalen Netz an eine Kurznachrichten-Dienststelle in dem Fremdnetz, das die mobilterminierte Kurznachricht gesendet hat, wenn die mobilterminierte Kurznachricht gefiltert wird und gefunden wird, dass sie eine mobilterminierte Spam-Kurznachricht ist.

6. Verfahren nach Anspruch 1, **dadurch gekennzeichnet, dass** es ferner Folgendes umfasst:
Konstruieren einer Nummer des International Mobile Station Identifier eines lokalen Teilnehmers durch die Kurznachrichten-Dienststelle in dem lokalen Netz und
Eintragen der Nummer des International Mobile Station Identifier in eine Sende-Routinginformationen-Antwortnachricht, wenn eine Sende-Routinginformationen-Nachricht empfangen wird, die verwendet wird, um Ortsinformationen des lokalen Teilnehmers von dem Fremdnetz zu erhalten; und
Eintragen der Nummer der Kurznachrichten-Dienststelle in dem lokalen Netz als die Nummer der Mobilvermittlungsstelle für den aktuellen Ort des lokalen Teilnehmers in die Sende-Routinginformationen-Antwortnachricht;
Rückmelden der Sende-Routinginformationen-Antwortnachricht, die der Eintragungsverarbeitung unterzogen wurde, durch die Kurznachrichten-Dienststelle in dem lokalen Netz an das Fremdnetz, das die Sende-Routinginformationen-Nachricht gesendet hat.

7. Signalverarbeitungssystem, umfassend:
eine Nachrichtenempfangseinheit (100), die dafür ausgelegt ist, eine von einem Fremdnetz zu einem lokalen Netz gesendete Nachricht zu empfangen, wobei die Nachricht zu dem Signalverarbeitungssystem in dem lokalen Netz geroutet wird,
indem Globaltitel- bzw. GT-Übersetzungsdaten eines Signaltransferpunkts der oberen Schicht in der Signalisierungsnetzstruktur gesetzt werden;
eine Nachrichtenanalysier- und Beurteilungseinheit (110), die dafür ausgelegt ist, die durch die Nachrichtenempfangseinheit (100) empfangene Nachricht zu analysieren und zu beurteilen, ob die empfangene Nachricht eine mobilterminierte Kurznachricht ist;
eine Weiterleitungseinheit (120) mobilterminierter Kurznachrichten, die dafür ausgelegt ist, die empfangene Nachricht zu einer Kurznachrichten-Dienststelle in dem lokalen Netz weiterzuleiten, wenn die Nachrichtenanalysier- und Beurteilungseinheit (110) beurteilt, dass die empfangene Nachricht eine mobilterminierte Kurznachricht ist.

8. System nach Anspruch 7, **dadurch gekennzeichnet, dass** es ferner Folgendes umfasst:
eine Weiterleitungseinheit (130) nicht-mobilterminierter Kurznachrichten, die dafür ausgelegt ist, eine nicht-mobilterminierte Kurznachricht gemäß einer in der nichtmobilterminierten Kurznachricht enthaltenen Ziel-Mobilvermittlungsstellennummer zu einer entsprechenden Mobilvermittlungsstelle weiterzuleiten, wenn die Nachrichtenanalysier- und Beurteilungseinheit (110) beurteilt, dass die durch die Nachrichtenempfangseinheit (100) empfangene Nachricht eine nicht-mobilterminierte Kurznachricht ist.

9. Kurznachrichten-Dienststelle, umfassend:
eine Empfangseinheit (200) mobilterminierter Kurznachrichten, die dafür ausgelegt ist, eine mobilterminierte Kurznachricht, die von einem Signalverarbeitungssystem weitergeleitet wird, wenn das Signalverarbeitungssystem beurteilt, dass eine durch das Signalverarbeitungssystem in einem lokalen Netz empfangene Nachricht von einem Fremdnetz die mobilterminierte Kurznachricht ist, zu empfangen, wobei die Nachricht zu dem Signalverarbeitungssystem in dem lokalen Netz durch Setzen von Globaltitel- bzw. GT-Übersetzungsdaten eines Signaltransferpunkts der oberen Schicht in der Signalisierungsnetzstruktur zu dem Signalverarbeitungssystem in dem lokalen Netz geroutet wird;
eine Kurznachrichten-Filtereinheit (210), die dafür ausgelegt ist, die durch die Empfangseinheit (200) mobilterminierter Kurznachrichten empfangene mobilterminierte Kurznachricht zu filtern;
eine Kurznachrichten-Weiterleitungseinheit (220), die dafür ausgelegt ist, eine durch die Kurznachrichten-Filtereinheit (210) durchgelassene legale mobilterminierte Kurznachricht zu einer entsprechenden Mobilvermittlungsstelle weiterzuleiten.

10. Kurznachrichten-Dienststelle nach Anspruch 9, **dadurch gekennzeichnet, dass** sie ferner Folgendes umfasst: eine Sende-Fehlschlagnachrichten-Rückmeldeeinheit (230), die dafür ausgelegt ist, eine Antwortnachricht mit Fehlschlagursache des Ablieferungsfehlschlags an eine Kurznachrichten-Dienststelle in dem Fremdnetz, das die mobilterminierte Kurznachricht gesendet hat, rückzumelden, wenn die Kurznachrichten-Filtereinheit (210) herausfindet, dass die mobilterminierte Kurznachricht eine mobilterminierte Spam-Kurznachricht ist.

11. Kurznachrichten-Dienststelle nach Anspruch 9, **dadurch gekennzeichnet, dass** sie ferner Folgendes umfasst:
eine Sende-Routinginformationen-Nachrichten-Empfangseinheit (240), die dafür ausgelegt ist, eine Sende-Routinginformationen-Nachricht zu empfangen, die verwendet wird, um Ortsinformationen eines lokalen Teilnehmers von dem Fremdnetz zu erhalten;
eine Teilnehmernummer-Konstruktionseinheit (250), die dafür ausgelegt ist, eine Nummer des International Mobile Station Identifier des lokalen Teilnehmers zu konstruieren, wenn die Sende-Routinginformationen-Nachrichten-Empfangseinheit (240) die Sende-Routinginformationen-Nachricht empfängt;
eine Sende-Routinginformationen-Antwortnachrichten-Eintragungseinheit (260), die dafür ausgelegt ist, die durch die Teilnehmernummer-Konstruktionseinheit (250) konstruierte Nummer des International Mobile Station Identifier in eine Sende-Routinginformationen-Antwortnachricht einzutragen und die Nummer der Kurznachrichten-Dienststelle als die Nummer der Mobilvermittlungsstelle für den aktuellen Ort des lokalen Teilnehmers in die Sende-Routinginformationen-Antwortnachricht einzutragen;
eine Sende-Routinginformationen-Antwortnachricht-Rückmeldungseinheit (270), die dafür ausgelegt ist, die Sende-Routinginformationen-Antwortnachricht, die der Eintragungsverarbeitung durch die Sende-Routinginformationen-Antwortnachrichten-Eintragungseinheit (260) unterzogen wurde, an das Fremdnetz, das die Sende-Routinginformationen-Nachricht gesendet hat, rückzumelden.

## Revendications

1. Procédé de filtrage de messages courts, comprenant :
le routage (10) d'un message, envoyé par un réseau étranger à un réseau local, jusqu'à un système de traitement de signaux dans le réseau local ;
l'acheminement (20), par le système de traitement de signaux dans le réseau local, du message reçu à un centre de service de messages courts dans le réseau local, si le système de traitement de signaux dans le réseau local analyse que le message reçu est un message court entrant ;
le filtrage (30), par le centre de service de messages courts dans le réseau local, du message court entrant ;
l'envoi (40), par le centre de service de messages courts dans le réseau local, du message court entrant à un centre de commutation de services mobiles correspondant, si le message court entrant est légal ; et
l'envoi (40), par le centre de commutation de services mobiles correspondant, du message court entrant à un abonné mobile ;
dans lequel le message envoyé par le réseau étranger au réseau local est routé jusqu'au système de traitement de signaux dans le réseau local en établissant des données de translation de titre global d'un point de transfert de signal de couche supérieure dans la structure de réseau de signalisation.

2. Procédé selon la revendication 1, **caractérisé en ce qu'**il comprend en outre :
l'acheminement, par le système de traitement de signaux dans le réseau local, du message reçu jusqu'au centre de commutation de services mobiles correspondant en fonction d'un numéro de centre de commutation de services mobiles correspondant contenu dans le message reçu, si le système de traitement de signaux dans le réseau local analyse que le message reçu n'est pas un message entrant.

3. Procédé selon la revendication 1, **caractérisé en ce que** le centre de service de messages courts dans le réseau local achemine le message court entrant légal jusqu'au centre de commutation de services mobiles correspondant en fonction d'un numéro de centre de commutation de services mobiles de destination contenu dans le message court entrant légal ; et
le centre de commutation de services mobiles correspondant envoie le message court entrant à l'abonné mobile correspondant en fonction d'un numéro d'Identifiant International de Station Mobile de l'abonné mobile contenu dans le message court entrant reçu.

4. Procédé selon la revendication 1, **caractérisé en ce qu'**il comprend en outre :
la communication, par le centre de commutation de services mobiles correspondant, d'un résultat d'envoi de message court entrant au centre de service de messages courts dans le réseau local ; et
le renvoi, par le centre de service de messages courts dans le réseau local, du résultat d'envoi reçu à un centre de service de messages courts correspondant dans le réseau étranger qui a envoyé le message court entrant légal.

5. Procédé selon la revendication 1, **caractérisé en ce qu'**il comprend en outre :
le renvoi, par le centre de service de messages courts dans le réseau local, d'un message de réponse avec la cause d'échec de l'échec de la délivrance à un centre de service de messages courts dans le réseau étranger qui a envoyé le message court entrant légal, quand après filtrage du message court entrant il est déterminé qu'il s'agit d'un message court entrant spam.

6. Procédé selon la revendication 1, **caractérisé en ce qu'**il comprend en outre :
la construction, par le centre de service de messages courts dans le réseau local, d'un numéro d'Identifiant International de Station Mobile d'un abonné local et le remplissage du numéro d'Identifiant International de Station Mobile dans un message de réponse d'envoi d'informations de routage, lors de la réception d'un message d'envoi d'informations de routage, lequel est utilisé pour obtenir des informations de position de l'abonné local, à partir du réseau étranger ; et
le remplissage du numéro du centre de service de messages courts dans le réseau local comme numéro du centre de commutation de services mobiles pour la position actuelle de l'abonné local dans le message de réponse d'envoi d'informations de routage ;
le renvoi, par le centre de service de messages courts dans le réseau local, du message de réponse d'envoi d'informations de routage qui a subi le traitement de remplissage au réseau étranger qui avait envoyé le message d'envoi d'informations de routage.

7. Système de traitement de signaux, comprenant :
une unité de réception de message (100), adaptée pour recevoir un message envoyé par un réseau étranger à un réseau local, le message étant routé jusqu'au système de traitement de signaux dans le réseau local en établissant des données de translation de titre global, GT, d'un point de transfert de signal de couche supérieure dans la structure de réseau de signalisation ;
une unité d'analyse et de jugement de message (110), adaptée pour analyser le message reçu par l'unité de réception de message (100), et juger si le message reçu est ou non un message court entrant ;
une unité d'acheminement de message court entrant (120), adaptée pour acheminer le message reçu à un centre de service de messages courts dans le réseau local, si l'unité d'analyse et de jugement de message (110) juge que le message reçu est un message court entrant.

8. Système selon la revendication 7, **caractérisé en ce qu'**il comprend en outre : une unité d'acheminement de message court non entrant (130), adaptée pour acheminer un message court non entrant à un centre de commutation de services mobiles correspondant, en fonction d'un numéro de centre de commutation de services mobiles de destination contenu dans le message court non entrant, lorsque l'unité d'analyse et de jugement de message (110) juge que le message reçu par l'unité de réception de message (100) est un message court non entrant.

9. Centre de service de messages courts, comprenant :
une unité de réception de message court entrant (200), adaptée pour recevoir un message court entrant acheminé depuis un système de traitement de signaux quand le système de traitement de signaux juge qu'un message provenant d'un réseau étranger reçu par le système de traitement de signaux, dans un réseau local, est le message court entrant, le message étant routé jusqu'au système de traitement de signaux dans le réseau local en établissant des données de translation de titre global, GT, d'un point de transfert de signal de couche supérieure dans la structure de réseau de signalisation ;
une unité de filtrage de message court (210), adaptée pour filtrer le message court entrant reçu par l'unité de réception de message court entrant (200) ;
une unité d'acheminement de message court (220), adaptée pour acheminer un message court entrant légal passé par l'unité de filtrage de message court (210) à un centre de commutation de services mobiles correspondant.

10. Centre de service de messages courts selon la revendication 9, **caractérisé en ce qu'**il comprend en outre : une unité de renvoi de message d'échec d'envoi (230), adaptée pour renvoyer un message de réponse avec la cause d'échec de l'échec de délivrance à un centre de service de messages courts dans le réseau étranger qui a envoyé le message court entrant si l'unité de filtrage de message court (210) détermine que le message court entrant est un message court entrant spam.

11. Centre de service de messages courts selon la revendication 9, **caractérisé en ce qu'**il comprend en outre :
une unité de réception de message d'envoi d'informations de routage (240), adaptée pour recevoir un message d'envoi d'informations de routage qui est utilisé pour obtenir des informations de position d'un abonné local depuis le réseau étranger ;
une unité de construction de numéro d'abonné (250), adaptée pour construire un numéro d'Identifiant International de Station Mobile de l'abonné local quand l'unité de réception de message d'envoi d'informations de routage (240) reçoit le message d'envoi d'informations de routage ;
une unité de remplissage de message de réponse d'envoi d'informations de routage (260), adaptée pour remplir le numéro d'Identifiant International de Station Mobile construit par l'unité de construction de numéro d'abonné (250) dans un message de réponse d'envoi d'informations de routage et remplir le numéro du centre de service de messages courts comme numéro du centre de commutation de services mobiles pour la position actuelle de l'abonné local dans le message de réponse d'envoi d'informations de routage ;
une unité de renvoi de message de réponse d'envoi d'informations de routage (270), adaptée pour renvoyer le message de réponse d'envoi d'informations de routage qui a subi le traitement de remplissage par l'unité de remplissage de message de réponse d'envoi d'informations de routage (260) au réseau étranger qui a envoyé le message d'envoi d'informations de routage.
